(19) Europäisches Patentamt
European Patent Office
Office européen des brevets

(11) **EP 4 156 804 A1**

(12) **EUROPEAN PATENT APPLICATION**
published in accordance with Art. 153(4) EPC

(43) Date of publication:
**29.03.2023 Bulletin 2023/13**

(21) Application number: **20936227.6**

(22) Date of filing: **22.05.2020**

(51) International Patent Classification (IPC):
***H04W 56/00*** *(2009.01)*

(52) Cooperative Patent Classification (CPC):
**H04W 56/00**

(86) International application number:
**PCT/CN2020/091838**

(87) International publication number:
**WO 2021/232412 (25.11.2021 Gazette 2021/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.
Tokyo (JP)**

(72) Inventors:
• **WANG, Jing
  Beijing 100190 (CN)**

• **HOU, Xiaolin
  Beijing 100190 (CN)**
• **CHEN, Lan
  Beijing 100190 (CN)**
• **LIU, Liu
  Beijing 100190 (CN)**
• **LI, Yong
  Beijing 100190 (CN)**
• **WANG, Tianjia
  Beijing 100190 (CN)**

(74) Representative: **Hoffmann Eitle
Patent- und Rechtsanwälte PartmbB
Arabellastraße 30
81925 München (DE)**

(54) **TERMINAL AND METHOD EXECUTED BY TERMINAL**

(57)    Provided are a terminal and a method executed by the terminal. The terminal is located in a communication system, and comprises: a receiving unit, which receives timing advance information which indicates a first timing advance amount; and a processing unit, which acquires a position of the terminal, determines a timing offset on the basis of the position, and determines a specific timing advance amount of the terminal on the basis of the first timing advance amount and the timing offset.

FIG.2

EP 4 156 804 A1

**Description**

TECHNICAL FIELD

The present disclosure relates to field of wireless communication, and more specifically to a terminal and a method performed by a terminal.

BACKGROUND

In an LTE system and 5G and NR systems, in order to avoid intra-cell interference and ensure orthogonality of uplink transmission of respective terminals within a same cell, it is required that the time of uplink information from the respective terminals within the same cell reaching a base station is basically synchronized. This uplink (UL) synchronization may be achieved by a Timing Advance (TA) transmitted by the terminals. For example, timing advance is indicated to each terminal through a random access response message in a random procedure. Each terminal determines its transmission timing for transmitting uplink information based on different amounts of timing advance, so that the time when uplink information from terminals at different locations in the cell arrives at the base station is aligned.

On the other hand, in a Non-Terrestrial Networks (NTN) system, it is also necessary to obtain UL synchronization between base stations and terminals. However, in the NTN system, the base stations are located on satellites in different orbits, and are far away from respective terminals in a ground range covered by the satellites. Therefore, in order to realize UL synchronization of the NTN system, the respective terminals need a larger timing advance.

SUMMARY OF THE DISCLOSURE

According to an aspect of the present disclosure, a terminal in a communication system is provided, comprising: a receiving unit that receives timing advance information indicating a first timing advance amount; and a processing unit that acquires a location of the terminal, determines a timing offset based on the location, and determines a terminal-specific timing advance amount based on the first timing advance amount and the timing offset.

According to an example of the present disclosure, in the above terminal, the timing offset is an integer multiple of a maximum value that the timing advance information can indicate

According to an example of the present disclosure, in the above terminal, the processing unit determines a distance from the terminal to a center of spot beams of a satellite in the communication system based on the location, and determines the timing offset based on the distance.

According to an example of the present disclosure, in the above terminal, the larger the distance, the larger the offset determined by the processing unit.

According to an example of the present disclosure, the above terminal further comprises: a transmitting unit that transmits uplink information based on the terminal-specific timing advance amount and a common timing advance amount, the common timing advance amount being a same timing advance amount for all terminals in the same cell as the terminal.

According to another aspect of the present disclosure, a terminal is provided, comprising: a receiving unit that receives, from a base station, information of a plurality of common timing advance reference points corresponding to a plurality of common timing advance amounts, respectively; and a processing unit that acquires a location of the terminal, and selects, based on the location, one common timing advance reference point from the plurality of common timing advance reference points as a target reference point.

According to an example of the present disclosure, in the above terminal, a cell of the base station is divided into a plurality of areas, each area containing a common timing advance reference point, and in each area, a common timing advance amount corresponding to a common timing advance reference point for that area is the same timing advance amount for all terminals that have selected the common timing advance reference point.

According to an example of the present disclosure, in the above terminal, the processing unit determines a distance from the terminal to each of the common timing advance reference points based on the location, and the processing unit selects a common timing advance reference point closest to the terminal as the target reference point.

According to an example of the present disclosure, in the above terminal, the processing unit determines a distance from the terminal to the base station based on the location, and when the distance from the terminal to the base station is greater than the distance from the common timing advance reference point closest to the terminal to the base station, selects a common timing advance reference point next closest to the terminal as the target reference point.

According to an example of the present disclosure, in the above terminal, the receiving unit further receives timing advance information indicating a terminal-specific timing advance amount, the terminal further comprising a transmitting unit that transmits uplink information based on the terminal-specific timing advance amount and a common timing advance amount corresponding to the target reference point.

According to another aspect of the present disclosure, a method performed by a terminal in a communication system is provided, comprising: receiving timing advance information indicating a first timing advance amount; and acquiring a location of the terminal, determining a timing offset based on the location, and determining a terminal-specific timing advance amount based on the first timing advance amount and the timing offset.

According to an example of the present disclosure, in the above method, the timing offset is an integer multiple of a maximum value that the timing advance information can indicate

According to an example of the present disclosure, in the above method, a distance from the terminal to a center of spot beams of a satellite in the communication system is determined based on the location, and the timing offset is determined based on the distance.

According to an example of the present disclosure, in the above method, the larger the distance, the larger the offset determined by the processing unit.

According to an example of the present disclosure, the above method further comprises: transmitting uplink information based on the terminal-specific timing advance amount and a common timing advance amount, the common timing advance amount being a same timing advance amount for all terminals in the same cell as the terminal.

According to another aspect of the present disclosure, a method performed by a terminal is provided, comprising: receiving, from a base station, information of a plurality of common timing advance reference points corresponding to a plurality of common timing advance amounts, respectively; and acquiring a location of the terminal, and selecting, based on the location, one common timing advance reference point from the plurality of common timing advance reference points as a target reference point.

According to an example of the present disclosure, in the above method, a cell of the base station is divided into a plurality of areas, each area containing a common timing advance reference point, and in each area, a common timing advance amount corresponding to a common timing advance reference point for that area is the same timing advance amount for all terminals that have selected the common timing advance reference point.

According to an example of the present disclosure, in the above method, a distance from the terminal to each of the common timing advance reference points is determined based on the location, and the processing unit selects a common timing advance reference point closest to the terminal as the target reference point.

According to an example of the present disclosure, in the above method, a distance from the terminal to the base station is determined based on the location, and when the distance from the terminal to the base station is greater than the distance from the common timing advance reference point closest to the terminal to the base station, a common timing advance reference point next closest to the terminal is selected as the target reference point.

According to an example of the present disclosure, in the above method, timing advance information indicating a terminal-specific timing advance amount is further received, and uplink information is transmitted based on the terminal-specific timing advance amount and a common timing advance amount corresponding to the target reference point.

BRIEF DESCRIPTION OF THE DRAWINGS

The foregoing and other objectives, features and advantages of the present disclosure will become clearer from more detailed description of embodiments of the present disclosure in conjunction with accompanying drawings. The accompanying drawings are used to provide a further understanding of the embodiments of the present disclosure, constitute a part of this specification, and help to explain the present disclosure together with the embodiments of the present disclosure, but are not intended to act as a limitation of the present disclosure. In the accompanying drawings, like reference numerals usually indicate like components or steps.

FIG. 1 is a diagram showing a maximum TA value supported by an RAR message in a 5G system.

FIG. 2 is a schematic diagram of a terminal according to a first embodiment of the present disclosure.

FIG. 3 is a schematic diagram showing a correspondence between a distance from the terminal to a center position of satellite beams and a timing offset.

FIG. 4 is a flowchart of a method performed by a terminal according to the first embodiment of the present invention.

FIG. 5 is a schematic diagram of a terminal in a second embodiment of the present disclosure.

FIG. 6 is a schematic diagram showing setting a plurality of common timing advance reference points in a cell.

FIG. 7 is a schematic structural diagram of a terminal according to an embodiment of the present disclosure.

FIG. 8 is a schematic diagram of a hardware structure of a device involved according to an embodiment of the present disclosure.

DESCRIPTION OF THE EMBODIMENTS

In order to make objectives, technical solutions and advantages of the present disclosure clearer, exemplary embodiments according to the present disclosure will be described in detail below with reference to the accompanying drawings. Like reference numerals refer to like elements throughout the accompanying drawings. It should be understood that the embodiments described herein are merely illustrative and should not be constructed as limiting the scope of the present disclosure. In addition, a user terminal described herein may include various types of terminals, for example, vehicle terminals, User Equipment (UE), mobile terminals (or referred to as mobile stations) or fixed terminals. A base station mentioned herein includes eNBs, gNBs, etc., and also include base stations located on satellites.

As described above, in the existing 5G and NR systems, in order to align the time when uplink information of respective terminals arrives at a base station, each terminal determines a transmission timing of uplink information based on a timing advance amount (hereinafter, referred to as a complete timing advance amount or a complete TA). The complete TA may be composed of two portions, a common timing advance amount (hereinafter, also referred to as a common TA, a cell-specific common TA, etc.) and a terminal-specific timing advance amount (referred to as a terminal-specific timing advance amount, a terminal-specific TA, a UE-specific TA, etc.). For example, a complete TA is a sum of a common TA and a terminal-specific TA.

A common TA is a TA specific to an entire cell, which is the same for all terminals in the same cell. A terminal-specific TA is a TA specific to each terminal in the cell, and for terminals located in different locations in the same cell, the terminal-specific TA of each terminal is different. The terminal-specific TA may be indicated by, for example, a Random Access Response (RAR) message in a random access procedure. Specifically, in the random access procedure, a terminal transmits a random access preamble to the base station, and receives a Random Access Response (RAR) message including timing advance information from the base station. Herein, the specific advance information indicates a terminal-specific TA.

In 5G and NR systems, the RAR message contains a Timing Advance command (TA command) field, which is used to indicate timing advance information. For example, a terminal-specific TA is indicated by this field. A length of this field is 12 bits, a corresponding TA index value ranges from 0 to 3846, a TA granularity is 16 Ts, and a maximum range that can be indicated is 3846* 16 Ts.

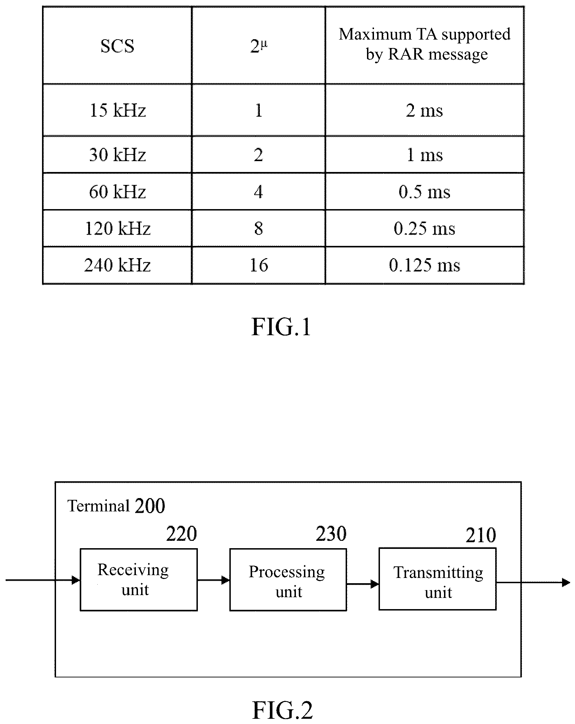

FIG. 1 is a diagram showing a maximum TA value supported by the RAR message under different Subcarrier Spacing (SCS). As shown in the figure, in the 5G system, when the subcarrier spacing is 15 kHz, 16Ts is 0.52$\mu$s, and the maximum terminal-specific TA that the RAR message can indicate is about 2 ms; when the subcarrier spacing is 30 kHz, 16 Ts is 0.26 $\mu$s, and the maximum terminal-specific TA that the RAR message can indicate is about 1 ms.

However, there are large coverage systems such as a Non-Terrestrial Networks (NTN) system. In the NTN system, a base station is located on a satellite (including GEO (Geosynchronous Earth Orbit), LEO (Low Earth Orbit), etc.), and a coverage of satellite beams is very large, resulting in a large differential delay between a terminal at the far end and a terminal at the near end within the coverage. Therefore, in the timing advance, the terminal-specific TA that the RAR message needs to indicate is large. For example, when the subcarrier spacing is 30 kHz, the differential delay between terminals within the coverage of GEO beams can reach 1.6 ms. In this case, the TA command field in the RAR message needs to be able to indicate a terminal-specific TA of 1.6 ms. However, as described above, the maximum value that the TA command field of the RAR message can indicate is only 1 ms, which cannot meet requirements of a system with a large coverage.

In order to solve the above problems, the present disclosure proposes a terminal and a method performed by the terminal, which can appropriately indicate timing advance of terminals by using an RAR message even in a communication system with a large coverage such as the non-terrestrial networks and the like. Hereinafter, a terminal and a method according to embodiments of the present disclosure will be described with reference to the accompanying drawings.

(First embodiment)

In this embodiment, for a communication system with a large coverage such as the NTN system, the terminal-specific TA is further divided into a first TA and a timing offset, and the first TA is indicated by an RAR message. The first TA is only a part of the terminal-specific TA, so even if the length of the TA command field of the RAR message is limited, the requirement for indicating the first TA can be met. Furthermore, the terminal determines the timing offset according to its own location. In this way, the terminal can obtain the terminal-specific TA from the timing offset and the first TA, so that the transmission with timing advance can be performed correctly. For example, when the subcarrier spacing is 15 kHz, it is assumed that for a terminal in the cell, a range of the terminal-specific TA is (2ms < terminal-specific TA $\leq$ 4ms), and the timing offset is 2 ms. In this case, a range of the first TA is (0 ms < first TA $\leq$ 2ms). However, as shown in FIG. 1, in this case, the TA command field of the RAR message can indicate 2 ms at most, which can meet the requirement of indicating the first TA.

Specifically, a terminal according to the first embodiment of the present disclosure will be explained with reference to FIG. 2. FIG. 2 is a schematic diagram of the terminal according to the first embodiment of the present disclosure, which communicates in an NTN system and is located within a coverage of satellite beams. As shown in FIG. 2, the terminal 200 includes a transmitting unit 210, a receiving unit 220 and a processing unit 230. The receiving unit 220 receives timing advance information indicating a first TA from a base station. In one example, the receiving unit 210 acquires the timing advance information by receiving a random access response message from a base station on the satellite. In addition, the receiving unit 210 may also receive the timing advance information in any other way.

In order to transmit properly, the terminal 200 needs to know a value of the timing offset in addition to being indicated with the first TA. The processing unit 230 acquires a location of the terminal 200 and determines the timing offset based on the location of the terminal 200.

According to an example of the present invention, the terminal-specific TA is a sum of the first TA and the timing offset, and the timing offset is an integer multiple of the maximum range (hereinafter referred to as TA_RAR_MAX, for example, when the subcarrier spacing is 15 kHz, TA_RAR_MAX = 2 ms) that can be indicated by the TA command field. That is, the timing offset may be represented by "k*TA _RAR_ MAX", where k is a natural number (k = 0,1,2,3...). In this case, the first TA is a value obtained by modulo the terminal-specific TA with TA_RAR_MAX. In other words, the first TA is a remainder obtained by dividing the terminal-specific TA by TA_RAR_MAX, as shown in the following Formula (1):

$$\text{The first TA} = \text{MOD (terminal-specific TA, TA\_RAR\_MAX)} \qquad \text{Formula (1)}$$

Thus, it can be guaranteed that the first TA must be smaller than TA_RAR_MAX, ensuring that the first TA can be represented by a 12-bit TA command field in the NTN system.

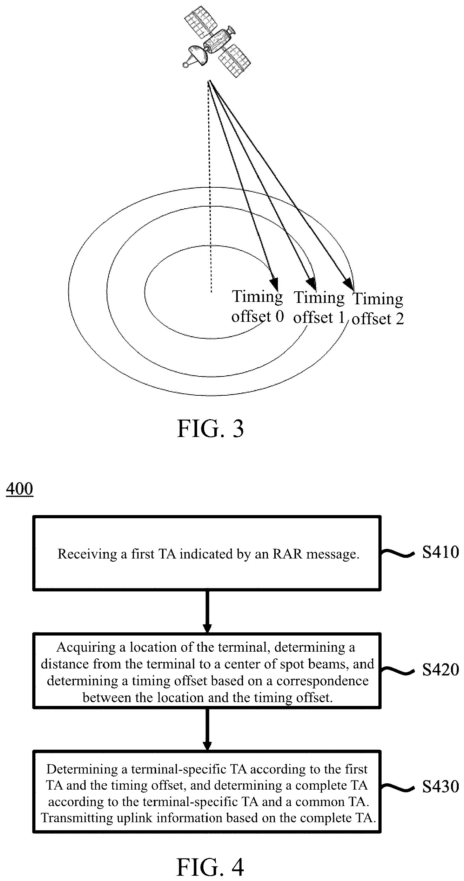

The timing offset corresponds to a distance from the terminal 200 to a center position of satellite spot beams. For example, if the distance to the center position of the spot beams is the same, the timing offset is the same. Also, the greater the distance from the center position of the spot beams, the greater the timing offset. FIG. 3 is a schematic diagram showing this correspondence. As shown in FIG. 3, on the surface of the earth covered by the satellite beams, a plurality of concentric circles may be drawn with the center position of the spot beams as the center, and distances from points on each concentric circle to the center position of the spot beams are the same. If several terminals in the cell are located on one of the concentric circles, timing offsets obtained by the processing units 230 of these terminals are all the same. For example, when these terminals are all located on the innermost concentric circle in FIG. 3, timing offsets of these terminals are all timing offset 0. In other words, these concentric circles form "contours" in terms of timing offset. Since the offsets are integer multiples of TA_RAR_MAX, an interval between each contour line is a value proportional to TA_RAR_MAX. In this case, the farther the terminal 200 is from the center position of the spot beams, the larger the timing offset determined by the processing unit 230.

The correspondence shown in FIG. 3 is only an example, and the correspondence between the distance from the terminal 200 to the center position of the spot beams and the timing offset may be any other correspondence. As described above, the timing offset = k*TA_RAR_MAX, so it is possible that the distance corresponds to k*TA_RAR_MAX, or the distance corresponds to k. In one example, the above-mentioned correspondence may be included in system information (e.g., a Master Information Block (MIB) or a System Information Block (SIB)), which is notified to the terminal by the base station in advance through a broadcast channel (PBCH) or a downlink shared channel (PDSCH). Alternatively, the correspondence may also be pre-specified in a standard.

Since the timing offset corresponds to the distance from the terminal 200 to the center position of the satellite spot beams, the processing unit 230 may determine its distance from the center position of the beams based on its own location, to determine the timing offset. How the processing unit determines its distance from the center position of the beams based on its own location will be explained below.

The processing unit 230 may acquire location information of the terminal 200 based on a positioning function of the terminal 200. The positioning function possessed by the terminal 200 may be a Global Navigation Satellite System (GNSS) function, a Global Positioning Satellite System (GPS) function or any other positioning function. The location information acquired by the processing unit 230 may be an instantaneous longitude and instantaneous latitude of the terminal 200, or may be any other parameters, as long as these parameters can determine the absolute location of the terminal 200 or its relative location with respect to the base station or other terminals.

If the processing unit 230 acquires the instantaneous longitude and instantaneous latitude of the terminal 200, the following Formula (2), for example, may be used to calculate the distance from the terminal 200 to the center position of the spot beams:

$$d_{\text{beam2ue}} = \sqrt{2\,\text{R}_e{}^2 - 2\,\text{R}_e{}^2 (\sin \varphi_b \sin \varphi_u + \cos \varphi_b \cos \varphi_u \cos(\lambda_b - \lambda_u))} \qquad \text{Formula (2)}$$

In Formula 2, $d_{\text{beam2ue}}$ represents the distance from the terminal 200 to the center position of the spot beams, $\text{R}_e$ represents the radius of the earth, $\lambda_u$ represents the instantaneous longitude of the terminal, $\varphi_u$ represents the instantaneous latitude of the terminal, $\lambda_b$ represents the instantaneous longitude of the center position of the satellite

spot beams, and $\varphi_b$ represents the instantaneous latitude of the center position of the satellite spot beams. λb and cpb may be included in system information (e.g., a Master Information Block (MIB) or a System Information Block (SIB)), which is notified to the terminal by the base station in advance through a broadcast channel (PBCH) or a downlink shared channel (PDSCH). Alternatively, the terminal may acquire satellite ephemeris data at the latest moment according to a signal transmitted by the satellite, and determine satellite position information and center position information of the satellite spot beams at the current moment.

To sum up, the processing unit 230 acquires the location of the terminal 200, calculates the distance from the location to the center position of the satellite spot beams, and determines the timing offset based on the correspondence between the distance and the timing offset. In another example, the location information itself such as the longitude and latitude of the terminal 200 may have a correspondence with the timing offset. In this case, the terminal does not need to calculate its distance to the center position of the spot beams, and can directly determine the timing offset based on the correspondence.

The processing unit 230 can obtain the terminal-specific TA by adding the timing offset to the received first TA. The processing unit 230 determines a complete TA actually used for transmitting uplink information according to the terminal-specific TA and a common TA of the cell where the terminal is located. The transmitting unit 210 transmits the uplink information using uplink resources allocated by UL grant at a transmission timing determined based on the complete TA.

According to an example of the present invention, the common TA may, for example, be included in system information (e.g., a Master Information Block (MIB) or a System Information Block (SIB)), which is notified to the terminal by the base station in advance through a broadcast channel (PBCH) or a downlink shared channel (PDSCH).

According to the terminal of this embodiment, the terminal-specific TA that should be indicated by the RAR message is further divided into the first TA and the timing offset. Thus, even if the length of the TA command field in the RAR message is short, it is sufficient to indicate the first TA. In this way, the problem that the indication range of the TA command field is too small in a system with a large beam coverage, such as NTN, is avoided. In addition, by determining the timing offset by the terminal itself based on the location acquired by the positioning function, the problem of a small number of temporary C-RNTI or UL grants in the RAR message can be avoided, so that the scenario of a large number of users in a system with a large beam coverage can be supported.

The terminal according to the first embodiment of the present invention has been described above with reference to FIG. 2 and FIG. 3. A method performed by a terminal will be described below with reference to FIG. 4. FIG. 4 is a flowchart of a method performed by a terminal according to the first embodiment of the present invention. The terminal communicates in the NTN system and is located within the coverage of the satellite beams.

As shown in FIG. 4, the method 400 includes step S410. In step S410, timing advance information is received from a base station, and a first timing advance amount (first TA) is obtained. In one example of step S410, the terminal acquires the first TA indicated by a timing advance command field by receiving a random access response message from a base station on a satellite. In addition, the timing advance information may also be received in any other way to obtain the first TA.

The method 400 further includes step S420. In step S420, a location of the terminal is acquired, a timing offset is determined based on the acquired location, and a terminal-specific TA is determined based on the timing offset and the first TA. According to an example of the present invention, the terminal-specific TA is a sum of the first TA and the timing offset, and the timing offset is an integer multiple of the maximum range (TA_RAR_MAX) that can be indicated by the TA command field. That is, the timing offset may be represented by "k*TA_RAR_MAX", where k is a natural number (k = 0,1,2,3...). In this case, the first TA is a remainder obtained by dividing the terminal-specific TA by TA_RAR_MAX. Thus, it can be guaranteed that the first TA must be smaller than TA_RAR_MAX, ensuring that the first TA can be represented by a 12-bit TA command field in the NTN system.

The timing offset corresponds to a distance from the terminal utilizing the method 400 to a center position of satellite spot beams. For example, if the distance to the center position of the spot beams is the same, the timing offset is the same. In this case, the greater the distance from the center position of the spot beams, the greater the timing offset determined in step S420. This correspondence may be shown in FIG. 3. Furthermore, the correspondence between the distance from the terminal to the center position of the spot beams and the timing offset may be any other correspondence. In one example, the above-mentioned correspondence may be included in system information (e.g., a Master Information Block (MIB) or a System Information Block (SIB)), which is notified to the terminal by the base station in advance through a broadcast channel (PBCH) or a downlink shared channel (PDSCH). Alternatively, the correspondence may also be pre-specified in a standard.

Therefore, in step S420, the distance to the center position of the spot beams may be determined based on the location of the terminal, and the timing offset may be determined based on the above-mentioned correspondence. In particular, in step S420, location information of the terminal may be acquired based on a positioning function of the terminal. The positioning function possessed by the terminal may be a Global Navigation Satellite System (GNSS) function, a Global Positioning Satellite System (GPS) function or any other positioning function. The location information acquired in step S420 may be an instantaneous longitude and instantaneous latitude of the terminal, or may be any other parameters, as long as these parameters can determine the absolute location of the terminal or its relative location with respect to the base station or other terminals. After acquiring the instantaneous longitude and instantaneous latitude of the terminal in step S420, the above Formula (2), for example, may be used to calculate the distance from the terminal to the center position of the spot beams, and the timing offset may be determined based on the correspondence between the distance and the timing offset.

The terminal-specific TA may be obtained by adding the timing offset to the received first TA.

The method may further include step S430. In step S430, a complete TA actually used for transmitting uplink information is determined according to the terminal-specific TA and a common TA of the cell where the terminal is located. The uplink information is transmitted using uplink resources allocated by UL grant at a transmission timing determined based on the complete TA.

According to the method of this embodiment, the terminal-specific TA that should be indicated by the RAR message is further divided into the first TA and the timing offset. Thus, even if the length of the TA command field in the RAR message is short, it is sufficient to indicate the first TA. In this way, the problem that the indication range of the TA command field is too small in a system with a large beam coverage, such as NTN, is avoided. In addition, by determining the timing offset by the terminal itself based on the location acquired by the positioning function, the problem of a small number of temporary C-RNTI or UL grants in the RAR message can be avoided, so that the scenario of a large number of users in a system with a large beam coverage can be supported.

(Second embodiment)

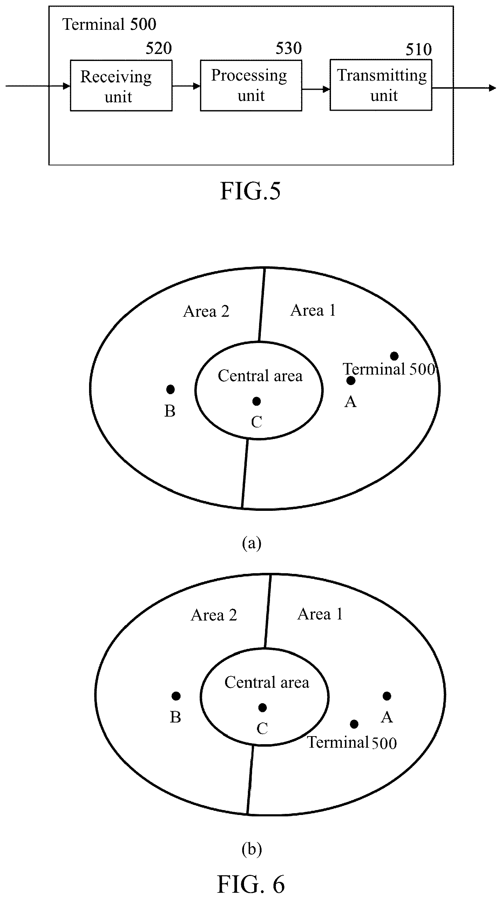

In this embodiment, the terminal-specific TA is indicated by timing advance information from the base station. In addition, a plurality of common timing advance reference points (common TA reference points) corresponding to a plurality of common timing advance amounts (common TA), respectively, are set in the cell. The terminal selects an appropriate reference point from them according to its own location. In the case where the complete TA is a definite value, if the common TA corresponding to the selected reference point is large enough, the terminal-specific TA that needs to be indicated is small. In this case, even if the length of the TA command field in the RAR message is limited, it is sufficient to indicate the terminal-specific TA. A terminal according to the second embodiment of the present disclosure will be described below with reference to FIG. 5. FIG. 5 is a schematic diagram of a terminal according to the second embodiment of the present disclosure.

As shown in FIG. 5, the terminal 500 includes a transmitting unit 510, a receiving unit 520 and a processing unit 530. The terminal 500 may be used in a communication system with a large coverage such as the NTN system and the like. In this embodiment, for components of the transmitting unit 510 and the receiving unit 520 that are the same as the transmitting unit 210 and the receiving unit 220 in function and structure, description thereof is omitted.

As described above, in this embodiment, the cell where the terminal 500 is located is divided into a plurality of areas, each area includes a common TA reference point, and each common TA reference point corresponds to a different common TA. According to an example of the present invention, the receiving unit 520 receives configuration information transmitted by the base station, where the configuration information includes information related to the plurality of common TA reference points of the cell. For example, the configuration information may be system information (Master Information Block (MIB) or System Information Block (SIB), etc.). The receiving unit 520 receives the system information in a broadcast channel (PBCH) or a downlink shared channel (PDSCH). The information of the common timing advance reference point includes, for example, the number of common TA reference points in the cell and a location of each reference point, but is not limited thereto.

The processing unit 530 acquires a location of the terminal 500 and selects a target reference point from the above-mentioned plurality of common TA reference points based on the location of the terminal 500. A common TA corresponding to the target reference point is large enough, and the terminal-specific TA is correspondingly small, so that the RAR message is also sufficient to indicate the terminal-specific TA. Like the terminal 200, the terminal 500 may be a terminal with a positioning function such as GNSS and GPS, and the processing unit 530 may acquire location parameters such as an instantaneous longitude and instantaneous latitude of the terminal 500.

According to an example of the present invention, the processing unit 530 selects a reference point closest to the terminal 500 as the target reference point according to distances from the terminal 500 to the respective common TA reference points in the cell. Hereinafter, this selection process will be specifically described with reference to FIG. 6.

(A) in FIG. 6 is a schematic diagram showing that a plurality of common TA reference points are set in a same cell. As shown in (a) of FIG. 6, except for the central area, the cell is divided into two parts, namely, area 1 and area 2. The central area is the area where the center of the base station is located. In the NTN system, the central area represents the area where the center of the satellite spot beams is located. Two common timing advance reference points A and B are respectively set in area 1 and the area 2, and the central area has a common timing advance reference point C. Reference points A, B, and C each correspond to a common TA, and the common TA of reference point A is the same timing advance amount for terminals that have selected reference point A. All terminals that select reference point A need to consider the common TA of reference point A when performing uplink transmission. The same is true for reference points B and C.

The processing unit 530 determines the reference point to be selected according to distances from the terminal 500 to reference points A, B, and C. As shown in (a) of FIG. 6, the terminal 500 is located in area 1, and its distance to reference point A is less than distances to reference points B and C. Therefore, for the terminal 500, the common TA corresponding to reference point A is greater than common TAs corresponding to reference points B and C. Compared with reference points B and C, if reference point A is selected, the terminal-specific TA required to be indicated by the timing advance information from the base station is small enough to be indicated by the TA command field in the RAR message. Therefore, the processing unit 530 selects reference point A closest to the terminal 500 as the target reference point. In this case, since all terminals located in area 1 are closest to reference point A, and all select reference point A as the target reference point, so the common TA corresponding to reference point A may be regarded as a common timing advance amount specific to area 1.

The situation of (a) of FIG. 6 is only for illustration, and the present invention is not limited thereto. For example, the number of reference points set in a cell is not limited to three, and may be more than three. Furthermore, in the situation of (a) of FIG. 6 , if the common TAs corresponding to reference points B and C are large enough, the processing unit 530 may also select reference point B or C as the target reference point. All in all, the target reference point selected by the processing unit 530 only needs to ensure that the RAR message is sufficient to indicate the terminal-specific TA, and that the base station and the terminal use a same algorithm rule so that the base station and the terminal can select a same target reference point. This algorithm rule is, for example, under the premise that the range of the RAR message is sufficient to indicate the terminal-specific TA, both the base station and the terminal select a reference point that makes a value indicated by the RAR largest or smallest as the target reference point.

In addition, note that in the RAR message, the TA command field is not expected to indicate negative values. However, if the distance from the target reference point selected by the processing unit 530 to the base station is greater than the distance from the terminal 500 to the base station, the common TA corresponding to the target reference point will be greater than the complete TA required by the terminal 500. In this case, the terminal-specific TA to be indicated by the timing advance information will be negative. The description will be made with reference to (b) of FIG. 6.

For example, in (b) of FIG. 6, the terminal 500 is closest to reference point A, but the distance from reference point A to the center of the base station is greater than the distance from the terminal 500 to the center of the base station. If reference point A is selected, the terminal-specific TA becomes a negative value and cannot be indicated by an RAR message or the like.

In order to avoid this problem, after the processing unit 530 determines distances from the terminal 500 to the respective reference points, the processing unit 530 may take the reference point closest to the terminal 500 as a quasi-reference point, and a reference point next closest to the terminal as a backup reference point. Next, the processing unit 530 decides whether the distance from the terminal 500 to the base station is greater than the distance from the quasi-reference point to the base station. If the distance from the terminal 500 to the base station is greater than the distance from the quasi-reference point to the base station, the quasi-reference point is selected as the target reference point; if the distance from the terminal 500 to the base station is less than the distance from the quasi-reference point to the base station, the backup reference point is selected as the target reference point.

In the case of (b) of FIG. 6, the processing unit 530 first selects reference point A as a quasi-reference point, and selects reference point C as a backup reference point. After deciding that the distance from the terminal 500 to the base station is less than the distance from reference point A to the base station, the processing unit 530 abandons the quasi-reference point A and selects the backup reference point C as the target reference point.

It should be noted that (b) of FIG. 6 is for illustration only, and the present invention is not limited thereto. When there are more than two reference points in the cell, the processing unit 530 may also select more than one backup reference point, as long as all these reference points can make the RAR message sufficient to indicate the terminal-specific TA. For example, the processing unit may select a reference point next closest to the terminal 500 as a first backup reference point, select a reference point next next closest to the terminal 500 as a second backup reference point, and so on. If the processing unit 530 decides that the distance from the first backup reference point to the base station is still greater than the distance from the terminal 500 to the base station, the processing unit 530 continues to decide the second backup reference point, until it selects a backup reference point that makes the terminal-specific timing advance amount non-negative.

After selecting an appropriate target reference point, the terminal 500 and the base station establish UL synchronization through a random access procedure. The processing unit 530 determines the complete TA based on the terminal-specific TA indicated by the timing advance information from the base station and the common TA corresponding to the selected target reference point. In an example of the present invention, the complete TA is the sum of the terminal-specific TA and the common TA.

According to an example of the present invention, the receiving unit 520 receives a random access response message including the timing advance information from the base station. In particular, the terminal-specific TA is indicated through a TA command field of the RAR message. The transmitting unit 510 transmits uplink information at a transmission timing determined according to the complete TA.

According to the terminal of this embodiment, the terminal-specific TA to be indicated by the TA command field in the RAR message is shortened as much as possible by selecting an appropriate common timing advance reference point based on its own location. In this way, the problem that the indication range of the TA command field is too small in a system with a large beam coverage such as NTN can be avoided.

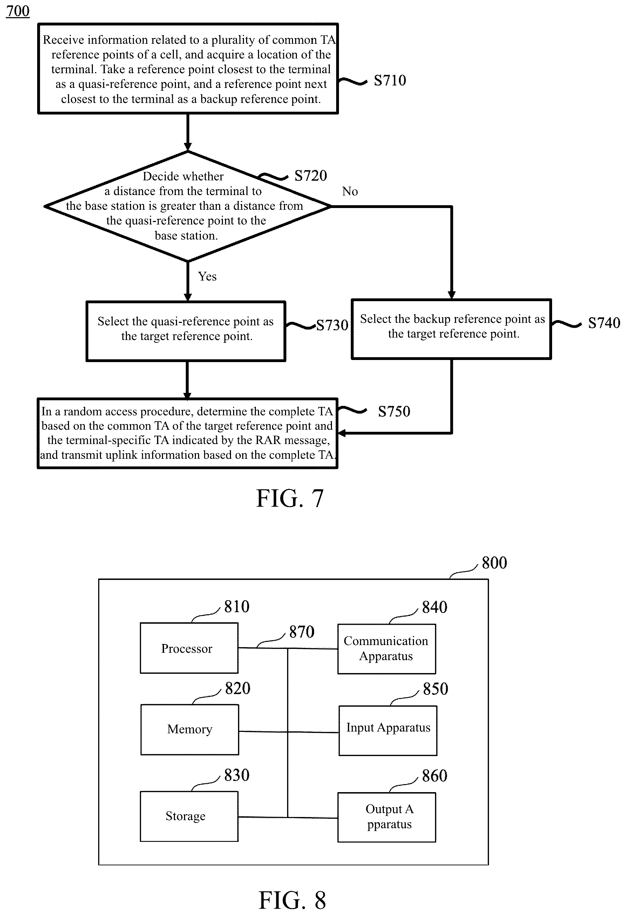

The terminal according to the second embodiment of the present invention has been described above with reference to FIG. 5 and FIG. 6. A method performed by a terminal will be described below with reference to FIG. 7. FIG. 7 is a flowchart of a method performed by a terminal according to the second embodiment of the present invention. The terminal may be used in a communication system with a large coverage such as the NTN system.

As described above, in this embodiment, the cell where the terminal utilizing the method 700 is located is divided into a plurality of areas, each area includes a common TA reference point, and each common TA reference point corresponds to a different common TA. As shown in FIG. 7, the method 700 includes step S710. In step S710, configuration information transmitted by the base station is received, where the configuration information includes information related to the plurality of common TA reference points of the cell. For example, the configuration information may be system information (Master Information Block (MIB) or System Information Block (SIB), etc.). In step S710, the system information is received in a broadcast channel (PBCH) or a downlink shared channel (PDSCH). The information of the common timing advance reference point includes, for example, the number of common TA reference points in the cell and a location of each reference point, but is not limited thereto.

Furthermore, in step S710, a location of the terminal is acquired, and a target reference point is selected from the above-mentioned plurality of common TA reference points based on the location of the terminal. A common TA corresponding to the target reference point is large enough, and the terminal-specific TA is correspondingly small, so that the RAR message is also sufficient to indicate the terminal-specific TA.

According to an example of the present invention, in step S710, an appropriate reference point is selected according to distances from the terminal 500 to the respective common TA reference points in the cell. As described above, it is generally considered to select a reference point closest to the terminal as the target reference point. However, if the distance from the reference point closest to the terminal to the base station is greater than the distance from the terminal to the base station, the common TA corresponding to the target reference point will be greater than the complete TA required by the terminal. In this case, the terminal-specific TA to be indicated by the timing advance information will be negative.

Therefore, according to an example of the present invention, in step S710, the reference point closest to the terminal is taken as a quasi-reference point, and a reference point next closest to the terminal is taken as a backup reference point. Thus, the method 700 further include step S720, step S730 and step S740. In step S720, whether the distance from the terminal to the base station is greater than the distance from the quasi-reference point to the base station is decided. If the distance from the terminal to the base station is greater than the distance from the quasi-reference point to the base station, the process proceeds to step S730, and the quasi-reference point is selected as the target reference point; if the distance from the terminal to the base station is less than the distance from the quasi-reference point to the base station, the process proceeds to step S740, and the backup reference point is selected as the target reference point.

In addition, according to an example of the present invention, step S730 may also precede step S720. That is, the quasi-reference point is first taken as the target reference point, and then the decision of step S720 is performed. If it is decided as "Yes" in step S720, go to step S750 directly; if it is decided as "No", go to step S740, and after S740 is executed, go to step S750.

In addition, according to an example of the present invention, when there are more than two reference points in the cell, more than one backup reference point may be selected in step S710, as long as all these reference points can make the RAR message sufficient to indicate the terminal-specific TA. For example, in step S710, a reference point next closest to the terminal may be selected as a first backup reference point, a reference point next next closest to the terminal may be selected as a second backup reference point, and so on. If in the decision of step S720, the distance from the first backup reference point to the base station is still greater than the distance from the terminal to the base station, continue to decide the second backup reference point, until it selects a backup reference point that makes the terminal-specific timing advance amount non-negative.

The method 700 further includes step S750. In step S750, in a random access procedure, the complete TA is determined based on the terminal-specific TA indicated by the RAR message and the common TA corresponding to the selected target reference point. For example, the complete TA is the sum of the terminal-specific TA and the common TA. Then, uplink information is transmitted according to a transmission timing determined by the complete TA.

According to the method of this embodiment, the terminal-specific TA to be indicated by the TA command field in the RAR message is shortened as much as possible by selecting an appropriate common timing advance reference point based on a location of the terminal. In this way, the problem that the indication range of the TA command field is too small in a system with a large beam coverage such as NTN can be avoided.

<Hardware structure>

In addition, block diagrams used in the description of the above embodiments illustrate blocks in units of functions. These functional blocks (structural blocks) may be implemented in arbitrary combination of hardware and/or software. Furthermore, means for implementing respective functional blocks is not particularly limited. That is, the respective functional blocks may be implemented by one apparatus that is physically and/or logically jointed; or more than two apparatuses that are physically and/or logically separated may be directly and/or indirectly connected (e.g. wired and/or wirelessly), and the respective functional blocks may be implemented by these apparatuses.

For example, a device (such as, the terminal, etc.) in an embodiment of the present disclosure may function as a computer that executes the processes of the wireless communication method of the present disclosure. FIG. 8 is a schematic diagram of a hardware structure of a device 800 involved in an embodiment of the present disclosure. The above device 800 (terminal) may be constituted as a computer apparatus that physically comprises a processor 810, a memory 820, a storage 830, a communication apparatus 840, an input apparatus 850, an output apparatus 860, a bus 870 and the like

In addition, in the following description, terms such as "apparatus" may be replaced with circuits, devices, units, and the like. The hardware structure of the user terminal and the base station may include one or more of the respective apparatuses shown in the figure, or may not include a part of the apparatuses.

For example, only one processor 810 is illustrated, but there may be multiple processors. Furthermore, processes may be performed by one processor, or processes may be performed by more than one processor simultaneously, sequentially, or with other methods. In addition, the processor 810 may be installed by more than one chip.

Respective functions of any of the device 800 may be implemented, for example, by reading specified software (program) on hardware such as the processor 810 and the memory 820, so that the processor 810 performs computations, controls communication performed by the communication apparatus 840, and controls reading and/or writing of data in the memory 820 and the storage 830.

The processor 810, for example, operates an operating system to control the entire computer. The processor 810 may be constituted by a Central Processing Unit (CPU), which includes interfaces with peripheral apparatuses, a control apparatus, a computing apparatus, a register and the like. For example, the processing unit and the like described above may be implemented by the processor 810.

In addition, the processor 810 reads programs (program codes), software modules and data from the storage 830 and/or the communication apparatus 840 to the memory 820, and execute various processes according to them. As for the program, a program causing computers to execute at least a part of the operations described in the above embodiments may be employed. For example, the processing unit of the terminal 700 may be implemented by a control program stored in the memory 820 and operated by the processor 810, and other functional blocks may also be implemented similarly.

The memory 820 is a computer-readable recording medium, and may be constituted, for example, by at least one of a Read Only Memory (ROM), an Erasable Programmable ROM (EPROM), an Electrically EPROM (EEPROM), a Random Access Memory (RAM) and other appropriate storage media. The memory 820 may also be referred to as a register, a cache, a main memory (a main storage apparatus) and the like. The memory 820 may store executable programs (program codes), software modules and the like for implementing a method involved in an embodiment of the present disclosure.

The storage 830 is a computer-readable recording medium, and may be constituted, for example, by at least one of a flexible disk, a floppy ○,R disk, a magneto-optical disk (e.g., a Compact Disc ROM (CD-ROM) and the like), a digital versatile disk, a Blu-ray○,R disk, a removable disk, a hard driver, a smart card, a flash memory device (e.g., a card, a stick and a key driver), a magnetic stripe, a database, a server, and other appropriate storage media. The storage 830 may also be referred to as an auxiliary storage apparatus.

The communication apparatus 840 is a hardware (transceiver device) performing communication between computers via a wired and/or wireless network, and is also referred to as a network device, a network controller, a network card, a communication module and the like, for example. The communication apparatus 840 may include a high-frequency switch, a duplexer, a filter, a frequency synthesizer and the like to implement, for example, Frequency Division Duplex (FDD) and/or Time Division Duplex (TDD). For example, the transmitting unit, the receiving unit and the like described above may be implemented by the communication apparatus 840.

The input apparatus 850 is an input device (e.g., a keyboard, a mouse, a microphone, a switch, a button, a sensor and the like) that receives input from the outside. The output apparatus 860 is an output device (e.g., a display, a speaker, a Light Emitting Diode (LED) light and the like) that performs outputting to the outside. In addition, the input apparatus 850 and the output apparatus 860 may also be an integrated structure (e.g., a touch screen).

Furthermore, the respective apparatuses such as the processor 810 and the memory 820 are connected by the bus 870 that communicates information. The bus 870 may be constituted by a single bus or by different buses between the apparatuses.

Furthermore, the terminal may comprise hardware such as a microprocessor, a Digital Signal Processor (DSP), an Application Specified Integrated Circuit (ASIC), a Programmable Logic Device (PLD), a Field Programmable Gate Array (FPGA), etc., and the hardware may be used to implement a part of or all of the respective functional blocks. For example, the processor 810 may be installed by at least one of these hardware.

(Variations)

In addition, the terms illustrated in the present specification and/or the terms required for understanding of the present specification may be substituted with terms having the same or similar meaning. For example, a channel and/or a symbol may also be a signal (signaling). Furthermore, the signal may be a message. A reference signal may be abbreviated as an "RS", and may also be referred to as a pilot, a pilot signal and so on, depending on the standard applied. Furthermore, a component carrier (CC) may also be referred to as a cell, a frequency carrier, a carrier frequency, and the like.

Furthermore, the information, parameters and so on described in this specification may be represented in absolute values or in relative values with respect to specified values, or may be represented by other corresponding information. For example, radio resources may be indicated by specified indexes. Furthermore, formulas and the like using these parameters may be different from those explicitly disclosed in this specification.

The names used for the parameters and the like in this specification are not limited in any respect. For example, since various channels (Physical Uplink Control Channels (PUCCHs), Physical Downlink Control Channels (PDCCHs), etc.) and information elements may be identified by any suitable names, the various names assigned to these various channels and information elements are not limitative in any respect.

The information, signals and the like described in this specification may be represented by using any one of various different technologies. For example, data, instructions, commands, information, signals, bits, symbols, chips, etc. possibly referenced throughout the above description may be represented by voltages, currents, electromagnetic waves, magnetic fields or particles, optical fields or photons, or any combination thereof.

In addition, information, signals and the like may be output from higher layers to lower layers and/or from lower layers to higher layers. Information, signals and the like may be input or output via a plurality of network nodes.

The information, signals and the like that are input or output may be stored in a specific location (for example, in a memory), or may be managed in a control table. The information, signals and the like that are input or output may be overwritten, updated or appended. The information, signals and the like that are output may be deleted. The information, signals and the like that are input may be transmitted to other apparatuses.

Reporting of information is by no means limited to the manners/embodiments described in this specification, and may be implemented by other methods as well. For example, reporting of information may be implemented by using physical layer signaling (for example, downlink control information (DCI), uplink control information (UCI)), higher layer signaling (for example, RRC (Radio Resource Control) signaling, broadcast information (master information blocks (MIBs), system information blocks (SIBs), etc.), MAC (Medium Access Control) signaling), other signals or combinations thereof.

In addition, physical layer signaling may also be referred to as L1/L2 (Layer 1/Layer 2) control information (L1/L2 control signals), L1 control information (L1 control signal) and the like. Furthermore, RRC signaling may also be referred to as RRC messages, for example, RRC connection setup messages, RRC connection reconfiguration messages, and so on. Furthermore, MAC signaling may be reported by using, for example, MAC control elements (MAC CEs).

Furthermore, notification of prescribed information (for example, notification of "being X") is not limited to being performed explicitly, and may be performed implicitly (for example, by not performing notification of the prescribed information or by notification of other information).

Decision may be performed by a value (0 or 1) represented by 1 bit, or by a true or false value (Boolean value) represented by TRUE or FALSE, or by a numerical comparison (e.g., comparison with a prescribed value).

Software, whether referred to as "software", "firmware", "middleware", "microcode" or "hardware description language", or called by other names, should be interpreted broadly to mean instructions, instruction sets, code, code segments, program codes, programs, subprograms, software modules, applications, software applications, software packages, routines, subroutines, objects, executable files, execution threads, procedures, functions and so on.

In addition, software, commands, information, etc. may be transmitted and received via a transport medium. For example, when software is transmitted from web pages, servers or other remote sources using wired technologies (coaxial cables, fibers, twisted pairs, Digital Subscriber Lines (DSLs), etc.) and/or wireless technologies (infrared ray, microwave, etc.), these wired technologies and/or wireless technologies are included in the definition of the transport medium.

The terms "system" and "network" used in this specification may be used interchangeably.

In this specification, terms like "Base Station (BS)", "wireless base station", "eNB", "gNB", "cell", "sector", "cell group", "carrier" and "component carrier" may be used interchangeably. A base station is sometimes referred to as terms such as a fixed station, a NodeB, an eNodeB (eNB), an access point, a transmitting point, a receiving point, a femto cell, a small cell and the like.

A base station is capable of accommodating one or more (for example, three) cells (also referred to as sectors). In the case where the base station accommodates a plurality of cells, the entire coverage area of the base station may be divided into a plurality of smaller areas, and each smaller area may provide communication services by using a base station sub-system (for example, a small base station for indoor use (a Remote Radio Head (RRH)). Terms like "cell" and "sector" refer to a part of or an entirety of the coverage area of a base station and/or a sub-system of the base station that provides communication services in this coverage.

In this specification, terms such as "Mobile Station (MS)", "user terminal", "User Equipment (UE)", and "terminal" may be used interchangeably. The mobile station is sometimes referred by those skilled in the art as a user station, a mobile unit, a user unit, a wireless unit, a remote unit, a mobile device, a wireless device, a wireless communication device, a remote device, a mobile user station, an access terminal, a mobile terminal, a wireless terminal, a remote terminal, a handset, a user agent, a mobile client, a client, or some other appropriate terms.

Furthermore, a wireless base station in this specification may also be replaced with a user terminal. For example, for a structure in which communication between a wireless base station and a user terminal is replaced with communication between a plurality of user terminals (Device-to-Device, D2D), the respective manners/embodiments of the present disclosure may also be applied. At this time, functions provided by the first communication device and the second communication device of the above device 800 may be regarded as functions provided by a user terminal. Furthermore, the words "uplink" and "downlink" may also be replaced with "side". For example, an uplink channel may be replaced with a side channel.

Also, a user terminal in this specification may be replaced with a wireless base station. At this time, functions provided by the above user terminal may be regarded as functions provided by the first communication device and the second communication device.

In this specification, specific actions configured to be performed by the base station sometimes may be performed by its upper nodes in certain cases. Obviously, in a network composed of one or more network nodes having base stations, various actions performed for communication with terminals may be performed by the base stations, one or more network nodes other than the base stations (for example, Mobility Management Entities (MMEs), Serving-Gateways (S-GWs), etc., may be considered, but not limited thereto)), or combinations thereof.

The respective manners/embodiments described in this specification may be used individually or in combinations, and may also be switched and used during execution. In addition, orders of processes, sequences, flow charts and so on of the respective manners/embodiments described in this specification may be re-ordered as long as there is no inconsistency. For example, although various methods have been described in this specification with various units of steps in exemplary orders, the specific orders as described are by no means limitative.

The manners/embodiments described in this specification may be applied to systems that utilize Long Term Evolution (LTE), Advanced Long Term Evolution (LTE-A, LTE-Advanced), Beyond Long Term Evolution (LTE-B, LTE-Beyond), the super 3rd generation mobile communication system (SUPER 3G), Advanced International Mobile Telecommunications (IMT-Advanced), the 4th generation mobile communication system (4G), the 5th generation mobile communication system (5G), Future Radio Access (FRA), New Radio Access Technology (New-RAT), New Radio (NR), New radio access (NX), Future generation radio access (FX), Global System for Mobile communications (GSM○,R), Code Division Multiple Access 3000 (CDMA 3000), Ultra Mobile Broadband (UMB), IEEE 920.11 (Wi-Fi○,R), IEEE 920.16 (WiMAX○,R), IEEE 920.20, Ultra-Wide Band (UWB), Bluetooth ○,R and other appropriate wireless communication methods, and/or next-generation systems that are enhanced based on them.

Terms such as "based on" as used in this specification do not mean "based on only", unless otherwise specified in other paragraphs. In other words, terms such as "based on" mean both "based on only" and "at least based on."

Any reference to units with designations such as "first", "second" and so on as used in this specification does not generally limit the quantity or order of these units. These designations may be used in this specification as a convenient method for distinguishing between two or more units. Therefore, reference to a first unit and a second unit does not imply that only two units may be employed, or that the first unit must precedes the second unit in several ways.

Terms such as "deciding (determining)" as used in this specification may encompass a wide variety of actions. The "deciding (determining)" may regard, for example, calculating, computing, processing, deriving, investigating, looking up (e.g., looking up in a table, a database or other data structures), ascertaining, etc. as performing the "deciding (determining)". In addition, the "deciding (determining)" may also regard receiving (e.g., receiving information), transmitting (e.g., transmitting information), inputting, outputting, accessing (e.g., accessing data in a memory), etc. as performing the "deciding (determining)". In addition, the "deciding (determining)" may further regard resolving, selecting, choosing, establishing, comparing, etc. as performing the "deciding (determining)". That is to say, the "deciding (determining)" may regard certain actions as performing the "deciding (determining)".

As used herein, terms such as "connected", "coupled", or any variation thereof mean any direct or indirect connection or coupling between two or more units, and may include the presence of one or more intermediate units between two units that are "connected" or "coupled" to each other. Coupling or connection between the units may be physical, logical or a combination thereof. For example, "connection" may be replaced with "access." As used in this specification, two units may be considered as being "connected" or "coupled" to each other by using one or more electrical wires, cables and/or printed electrical connections, and, as a number of non-limiting and non-inclusive examples, by using electromagnetic energy having wavelengths in the radio frequency region, microwave region and/or optical (both visible and invisible) region.

When terms such as "including", "comprising" and variations thereof are used in this specification or the claims, these terms, similar to the term "having", are also intended to be inclusive. Furthermore, the term "or" as used in this specification or the claims is not an exclusive or.

Although the present disclosure has been described above in detail, it should be obvious to a person skilled in the art that the present disclosure is by no means limited to the embodiments described in this specification. The present disclosure may be implemented with various modifications and alterations without departing from the spirit and scope of the present disclosure defined by the recitations of the claims. Consequently, the description in this specification is for the purpose of illustration, and does not have any limitative meaning to the present disclosure.

**Claims**

1. A terminal in a communication system, comprising:

   a receiving unit that receives timing advance information indicating a first timing advance amount; and
   a processing unit that acquires a location of the terminal, determines a timing offset based on the location, and determines a terminal-specific timing advance amount based on the first timing advance amount and the timing offset.

2. The terminal of claim 1, wherein,
   the processing unit determines a distance from the terminal to a center of spot beams of a satellite in the communication system based on the location, and determines the timing offset based on the distance.

3. The terminal of claim 1, further comprising:

   a transmitting unit that transmits uplink information based on the terminal-specific timing advance amount and a common timing advance amount,
   the common timing advance amount being a same timing advance amount for all terminals in same cell as the terminal.

4. The terminal of any one of claims 1 to 3, wherein
   the timing offset is an integer multiple of a maximum value that the timing advance information can indicate.

5. A method performed by a terminal in a communication system, comprising:

   receiving timing advance information indicating a first timing advance amount; and
   acquiring a location of the terminal, determining a timing offset based on the location, and determining a terminal-specific timing advance amount based on the first timing advance amount and the timing offset.

6. A terminal, comprising:

   a receiving unit that receives, from a base station, information of a plurality of common timing advance reference points corresponding to a plurality of common timing advance amounts, respectively; and
   a processing unit that acquires a location of the terminal, and selects, based on the location, one common timing advance reference point from the plurality of common timing advance reference points as a target reference point.

7. The terminal of claim 6, wherein,

   a cell of the base station is divided into a plurality of areas, each area containing a common timing advance reference point, and

in each area, a common timing advance amount corresponding to a common timing advance reference point for that area is the same timing advance amount for all terminals that have selected the common timing advance reference point.

8. The terminal of claim 6 or 7, wherein,

the processing unit determines a distance from the terminal to each of the common timing advance reference points based on the location, and

the processing unit selects a common timing advance reference point closest to the terminal as the target reference point.

9. The terminal of claim 8, wherein,

the processing unit determines a distance from the terminal to the base station based on the location, and when a distance from the terminal to the base station is greater than a distance from the common timing advance reference point closest to the terminal to the base station, selects a common timing advance reference point next closest to the terminal as the target reference point.

10. A method performed by a terminal, comprising:

receiving, from a base station, information of a plurality of common timing advance reference points corresponding to a plurality of common timing advance amounts, respectively; and

acquiring a location of the terminal, and selecting, based on the location, one common timing advance reference point from the plurality of common timing advance reference points as a target reference point.

| SCS | $2^{\mu}$ | Maximum TA supported by RAR message |
|---|---|---|
| 15 kHz | 1 | 2 ms |
| 30 kHz | 2 | 1 ms |
| 60 kHz | 4 | 0.5 ms |
| 120 kHz | 8 | 0.25 ms |
| 240 kHz | 16 | 0.125 ms |

FIG.1

Terminal **200**

**220**  **230**  **210**

Receiving unit → Processing unit → Transmitting unit

FIG.2

Timing
offset 0

Timing
offset 1

Timing
offset 2

FIG. 3

400

Receiving a first TA indicated by an RAR message.

S410

Acquiring a location of the terminal, determining a distance from the terminal to a center of spot beams, and determining a timing offset based on a correspondence between the location and the timing offset.

S420

Determining a terminal-specific TA according to the first TA and the timing offset, and determining a complete TA according to the terminal-specific TA and a common TA. Transmitting uplink information based on the complete TA.

S430

FIG. 4

Terminal 500

520      530      510

| Receiving unit | Processing unit | Transmitting unit |

FIG.5

Area 2      Area 1

Central area

Terminal 500

B

C

A

(a)

Area 2      Area 1

Central area

B

C

A

Terminal 500

(b)

FIG. 6

700

Receive information related to a plurality of common TA reference points of a cell, and acquire a location of the terminal. Take a reference point closest to the terminal as a quasi-reference point, and a reference point next closest to the terminal as a backup reference point. — S710

Decide whether a distance from the terminal to the base station is greater than a distance from the quasi-reference point to the base station. — S720

No

Yes

Select the quasi-reference point as the target reference point. — S730

Select the backup reference point as the target reference point. — S740

In a random access procedure, determine the complete TA based on the common TA of the target reference point and the terminal-specific TA indicated by the RAR message, and transmit uplink information based on the complete TA. — S750

FIG. 7

800

810 Processor

870

840 Communication Apparatus

820 Memory

850 Input Apparatus

830 Storage

860 Output Apparatus

FIG. 8

## INTERNATIONAL SEARCH REPORT

| International application No. |
|---|
| **PCT/CN2020/091838** |

**A.    CLASSIFICATION OF SUBJECT MATTER**

H04W 56/00(2009.01)i

According to International Patent Classification (IPC) or to both national classification and IPC

**B.    FIELDS SEARCHED**

Minimum documentation searched (classification system followed by classification symbols)

H04W; H04B

Documentation searched other than minimum documentation to the extent that such documents are included in the fields searched

Electronic data base consulted during the international search (name of data base and, where practicable, search terms used)

EPODOC, WPI, CNPAT, CNKI, 3GPP: 提前, 偏移, 定时, 时间, 位置, 距离, 波束中心, 卫星, 公共, advance, timing, TA, offset, location, position, beam, center, satellite, non-terrestrial networks, NTN, common

**C.    DOCUMENTS CONSIDERED TO BE RELEVANT**

| Category* | Citation of document, with indication, where appropriate, of the relevant passages | Relevant to claim No. |
|---|---|---|
| X | SONY. "R1-1912348: Discussion on TA compensation and adjustment in NTN." *3GPP TSG RAN WG1 #99.*, 22 November 2019 (2019-11-22),<br>    chapter 2 | 1-5 |
| X | SAMSUNG. "R1-1910481:Uplink timing advance/RACH procedure and Initial Access for NTN." *3GPP TSG RAN WG1 Meeting #98b.*, 20 October 2019 (2019-10-20),<br>    chapter 2 | 6-10 |
| X | CN 111130614 A (HUAWEI TECHNOLOGIES CO., LTD.) 08 May 2020 (2020-05-08)<br>    description, paragraphs [0058]-[0182], and figures 1-21 | 1-5 |
| A | CN 107333241 A (UNIVERSITY OF ELECTRONIC SCIENCE AND TECHNOLOGY OF CHINA) 07 November 2017 (2017-11-07)<br>    entire document | 1-10 |
| A | CN 107197517 A (UNIVERSITY OF ELECTRONIC SCIENCE AND TECHNOLOGY OF CHINA) 22 September 2017 (2017-09-22)<br>    entire document | 1-10 |

☑ Further documents are listed in the continuation of Box C.          ☑ See patent family annex.

| | |
|---|---|
| *    Special categories of cited documents: | "T"   later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **13 January 2021** | **25 February 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/091838** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 110519861 A (CHENGDU SPACEON GROUP CO., LTD.) 29 November 2019 (2019-11-29)<br>        entire document | 1-10 |
| A | CN 110446254 A (CHENGDU SPACEON GROUP CO., LTD.) 12 November 2019 (2019-11-12)<br>        entire document | 1-10 |
| A | WO 2018084570 A1 (LG ELECTRONICS INC.) 11 May 2018 (2018-05-11)<br>        entire document | 1-10 |
| A | HUAWEI et al. "R1-1911860:Discussion on Doppler compensation, timing advance and RACH for NTN."<br>*3GPP TSG RAN WG1 Meeting #99.*, 22 November 2019 (2019-11-22),<br>        entire document | 1-10 |

Form PCT/ISA/210 (second sheet) (January 2015)

**INTERNATIONAL SEARCH REPORT**
Information on patent family members

International application No.

**PCT/CN2020/091838**

| Patent document cited in search report | | | Publication date (day/month/year) | Patent family member(s) | | | Publication date (day/month/year) |
|---|---|---|---|---|---|---|---|
| CN | 111130614 | A | 08 May 2020 | None | | | |
| CN | 107333241 | A | 07 November 2017 | None | | | |
| CN | 107197517 | A | 22 September 2017 | None | | | |
| CN | 110519861 | A | 29 November 2019 | None | | | |
| CN | 110446254 | A | 12 November 2019 | None | | | |
| WO | 2018084570 | A1 | 11 May 2018 | KR | 20190071810 | A | 24 June 2019 |
| | | | | CN | 109891959 | A | 14 June 2019 |
| | | | | US | 2020077349 | A1 | 05 March 2020 |
| | | | | EP | 3537783 | A1 | 11 September 2019 |

Form PCT/ISA/210 (patent family annex) (January 2015)